# EUROPEAN PATENT SPECIFICATION

(11) **EP 3 907 710 B1**
(45) Date of publication and mention of the grant of the patent: **08.07.2026**
(21) Application number: 21173007.2
(22) Date of filing: 10.05.2021
(51) Int. Cl.: G06Q 20/32, G06Q 20/18, G07F 9/00

(54) **SYSTEM FOR SELECTING PRODUCTS DELIVERED BY AUTOMATIC VENDING MACHINES AND AUTOMATIC VENDING MACHINE INCLUDING SUCH A SELECTION SYSTEM**
SYSTEM ZUR AUSWAHL VON PRODUKTEN, DIE VON VERKAUFSAUTOMATEN GELIEFERT WERDEN, SOWIE VERKAUFSAUTOMAT EINSCHLIESSLICH EINES SOLCHEN AUSWAHLSYSTEMS
SYSTÈME DE SELECTION DE PRODUITS LIVRÉS PAR DES MACHINES DE VENTE AUTOMATIQUE ET MACHINE DE VENTE AUTOMATIQUE INCLUANT UN TEL SYSTÈME DE SELECTION

(30) Priority: 08.05.2020 IT 202000010417
(43) Date of publication of application: 10.11.2021
(73) Proprietor: Manea Vending S.r.l., 36016 Thiene (VI) (IT)
(72) Inventor: NICOLINI, Antonio, 36015 Schio (VI) (IT)
(74) Representative: Burchielli, Riccardo

(56) References cited:
- CN-U- 206 863 848
- US-A1- 2014 096 201
- US-A1- 2020 082 402
- US-B1- 10 304 057

## Description

This invention generically relates to a system for selecting products, such as edible goods or durable goods of various kinds, delivered by automatic vending machines, and to an automatic vending machine of the aforesaid products employing such a selection system.

More particularly, the invention relates to a method of displaying the keyboard and/or touchscreen for selecting products for sale by automatic vending machines.

As is well known, automatic vending machines for hiring out and selling durable goods and/or selling edible products, such as sweet and savoury snacks, sweets, sandwiches, ice cream, beverages of various kinds, or selling products such as cigarettes, tickets or instant lottery vouchers, etc., are currently widespread.

Specifically, these known automatic vending machines comprise a magazine, organised in several housing rows or lines located at various height levels or shelves, at each of which they are also placed side-by-side. The products to be dispensed are placed in a plurality of support seats defined in each of the housing rows according to conformations capable of accommodating a wide range of products or goods differing in shape and packaging.

If the products are intended for final dispensing, such as edible goods, the automatic vending machines are equipped with a transparent front door, which is rotatably coupled to the box-shaped casing in which the magazine is contained, to allow the end user to view the available products and thus make a choice.

Each housing row, or in some constructional solutions, even each individual support seat, defined in the magazine of these vending machines is also marked by an alphanumeric code that the user enters on a special control panel applied externally to the box-shaped casing, to make the desired choice, obviously after having paid the relative amount by means of special coin acceptors or prepaid electronic mediums, such as (contact or contactless) rechargeable thumb drives and/or swipe cards.

When the selection is made by the user, the products lined up in the rows are moved for a pre-established distance by means of transport means towards the transparent front door so that the first product of the selected row is released, generally by gravity, into a collection compartment obtained in the box-shaped casing and which the user accesses by moving a safety flap, provided below the door and which normally closes the access opening of the collection compartment.

The safety flap also prevents products from being illegally removed from the display magazine when the goods are collected.

Currently, the most common form of purchase, at least in Europe, is the use of coins and paper money, i.e. so-called cash payments; in addition, payment systems are possible such as credit and debit cards and various pre-loaded recognition systems, such as contact or wireless thumb drives, cards, etc.

Increasingly, in line with the latest market trends, automatic vending machine operators are creating specific APPs which, downloaded onto customers' smartphones, constitute an electronic purse that can allow access to purchases from vending machines by managing credit and allowing it to be reloaded electronically or via cash.

The use of wireless communication systems (Bluetooth^{®} and/or Wi-Fi) makes the APPs interactive between the automatic vending machines and their control servers, and these communication systems can also be used as telemetry and remote telemetry management systems for the vending machines.

In any case, the product selection operation, which takes place by selection code or image on the screen, is always carried out via the keyboard or touchscreen on the automatic vending machine.

This constitutes a contact element for users of automatic vending machines which still makes access to these vending machines problematic and unsafe, as this contact element, which is common to all users, can be a point of transmission of possible bacterial loads and viruses.

Moreover, a system for selecting products dispensable by automatic vending machines having the features of the preamble of the appended claim 1 is known for example from US2020/082402A1 and US10304057B1. This invention aims to overcome the drawbacks of the known art indicated above and, in particular, the main aim of the invention is to make available a system for selecting products dispensable by automatic vending machines which makes it possible to limit the physical contact between the users and the vending machine in order to limit the transmission of bacterial loads or viruses.

Another aim of the invention is to create a system for selecting products dispensable by automatic vending machines which allows the vending machine to be accessible to any type of user while limiting the physical contact of the users with the operating parts of the vending machine (keyboards, touchscreen).

A further aim of the invention is to provide an automatic vending machine using the above-mentioned system for selecting dispensable products. These and other aims are achieved by means of a system for selecting products delivered by automatic vending machines, according to the appended claim 1; other detailed technical features of the selection system the object of the invention are disclosed in the corresponding dependent claims.

Advantageously, the invention makes it possible to make the automatic vending machine accessible to any type of public use, while limiting the physical contact with the parts in use of the vending machine itself (keyboard, touchscreen) to the greatest extent possible.

This is achieved through the use of users' smartphones and without having to own and/or download APPs or other types of software.

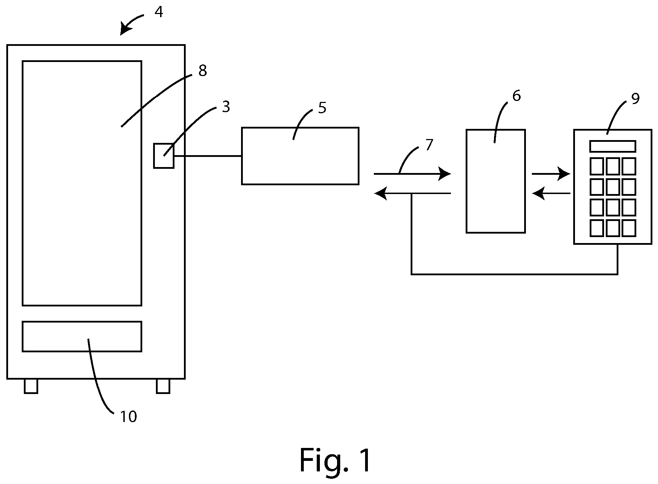

The aforementioned aims and advantages, as well as others which will be better highlighted in the following discussion, will be more apparent from the description below relating to a preferred embodiment of the system for selecting products dispensable by automatic vending machines, which is the object of this invention, provided by way of preferred, but non-limiting, example, and with reference also to the attached figure (Figure 1), which shows a block diagram of the operation of the system for selecting products dispensable by automatic vending machines according to this invention. With reference to the mentioned figure, numeral 4 generically indicates an automatic vending machine, which substantially has a front portion 8, which is usually transparent, a mouth or dispensing door 10 for dispensing the products contained in the front portion 8 and an electronic board for operating the product control or selection panel.

According to the invention, a wireless communication device 5, for example of the Bluetooth^{®} or Wi-Fi type, is integrated in the electronic board of the control and selection panel of the vending machine 4; alternatively, a wireless circuit, for example of the Wi-Fi type, is connected to the aforesaid electronic board.

In this way, the control panel can be accessed by cell phones (smartphones) 6 in the vicinity of the automatic vending machine 4 via a LAN network 7 created by the vending machine 4.

The transmitted signal is only accessible in specific and restricted proximity of the vending machine 4 and the connection to the LAN network 7 is only allowed to the user closest to the vending machine 4, thus excluding others. Once access is confirmed on the user's smartphone 6 and the Bluetooth^{®} or Wi-Fi connection to the LAN network 7 is established, the communication device 5 transmits a virtual keyboard 9 to the user's smartphone 6, which is displayed on the screen.

The virtual keyboard 9 corresponds in practice to the control panel of the vending machine 4 and is capable of interacting with the vending machine 4 so that it is possible to select and purchase a product contained in the vending machine 4 via the keyboard 9, after payment has been made. The LAN network 7 allows the selection number or code selected via the virtual keyboard 9 to be transmitted via the communication device 5 to a CPU 3 of the vending machine 4, which will interpret it as if it were transmitted by the physical keyboard of the control panel of the vending machine 4.

After making a comparison with the payment made, the CPU 3 starts the distribution procedure via the dispensing mouth 10.

Whenever a selection is made via the virtual keyboard 9, communication over the LAN network 7 is automatically interrupted to allow access by other users.

Finally, the system can be integrated on any type of automatic vending machine 4 with a keyboard or touchscreen by integrating a configurable interface hardware capable of intercepting the transmission matrix and emulating the selections and/or physical keys of the selection panel.

On the basis of the foregoing, it is understood that the system for selecting products dispensable by automatic vending machines, as well as the automatic vending machine incorporating such a system, both being objects of this invention, achieve the aims and advantages already mentioned.

In particular, the invention eliminates the main points of physical contact between the user and the vending machine, thereby increasing the sanitary safety against viruses and bacteria; it also has the following advantages:
- extreme selection speed;
- use of the user's own medium (smartphone);
- no software to download or install;
- free system;
- use of a universal communication system;
- maximum accessibility;
- immediacy and simplicity during purchase;
- maximum privacy;
- integration on any type of automatic vending machine with interface hardware.

Lastly, it is clear that numerous other variants might be made to the selection system and the vending machine in question, without forsaking the principles of novelty of the inventive idea contained in the accompanying claims, as it is also clear that in the practical implementation of the invention, the materials, shapes and dimensions of the illustrated details can be of any type according to requirements.

Where the technical features mentioned in the following claims are followed by reference numbers, the reference numbers have been used only with the aim of increasing the intelligibility of the claims themselves .

## Claims

1. System for selecting dispensable products delivered by automatic vending machines, comprising an automatic vending machine (4), which has a front portion (8), a mouth or door (10) for delivering products contained inside the front portion (8) and an electronic circuit including a CPU (3) for selecting said products, wherein said electronic circuit for selecting said products integrates or is connected to a wireless communication device (5), of the Bluetooth^{®} or Wi-Fi type, so that said automatic vending machine (4) activates a LAN communication network (7), said LAN communication network (7) being connected, within a predetermined distance from said automatic vending machine (4), with at least one user's cell phone (6) and wherein said LAN communication network (7) is connected with one user having a cell phone (6) closest to the automatic vending machine (4), thus excluding other users, said wireless communication device (5) being configured to transmit a virtual keyboard (9) to said user's cell phone (6), said virtual keyboard (9) being displayed on the screen of said cell phone (6) and corresponding to a control and selection panel of said automatic vending machine (4), so that the user is able to select and purchase a product contained in said automatic vending machine (4) through said virtual keyboard (9), **characterised in that** said LAN communication network (7) is automatically interrupted each time a selection is made by the user via said virtual keyboard (9), so as to allow other accesses by other users.

2. Selection system as claimed in claim 1, **characterized in that** said LAN communication network (7) is configured to transmit, via said wireless communication device (5), a selection number or code chosen by the user through the virtual keyboard (9) to said CPU (3) of said automatic vending machine (4).

3. Selection system as claimed in claim 2, **characterized in that** said CPU (3) control the payment made and allows delivering of selected products through said mouth or dispensing door (10).

## Patentansprüche

1. System zur Auswahl von Produkten, die von Verkaufsautomaten geliefert werden, mit einem Verkaufsautomaten (4), der einen vorderen Teil (8), eine Öffnung oder Tür (10) zur Abgabe von im vorderen Teil (8) enthaltenen Produkten und eine elektronische Schaltung mit einer CPU (3) zur Auswahl der Produkte aufweist, wobei die elektronische Schaltung zum Auswählen der Produkte eine drahtlose Kommunikationsvorrichtung (5) des Typs Bluetooth^{®} oder Wi-Fi integriert oder mit dieser verbunden ist, so dass der Verkaufsautomat (4) ein LAN-Kommunikationsnetz (7) aktiviert, wobei das LAN-Kommunikationsnetz (7) innerhalb eines vorbestimmten Abstands von dem Verkaufsautomaten (4) verbunden ist, mit mindestens einem Mobiltelefon (6) eines Benutzers verbunden ist und wobei das LAN-Kommunikationsnetzwerk (7) mit einem Benutzer verbunden ist, der ein Mobiltelefon (6) hat, das dem Verkaufsautomaten (4) am nächsten ist, wodurch andere Benutzer ausgeschlossen werden, wobei die drahtlose Kommunikationsvorrichtung (5) so konfiguriert ist, dass sie eine virtuelle Tastatur (9) an das Mobiltelefon (6) des Benutzers überträgt, wobei die virtuelle Tastatur (9) auf dem Bildschirm des Mobiltelefons (6) angezeigt wird und einem Steuer- und Auswahlfeld des Verkaufsautomaten (4) entspricht, so dass der Benutzer in der Lage ist, ein in dem Verkaufsautomaten (4) enthaltenes Produkt über die virtuelle Tastatur (9) auszuwählen und zu kaufen, **dadurch gekennzeichnet, dass** das LAN-Kommunikationsnetzwerk (7) jedes Mal automatisch unterbrochen wird, wenn eine Auswahl durch den Benutzer über die virtuelle Tastatur (9) getroffen wird, um andere Zugriffe durch andere Benutzer zu ermöglichen.

2. System zur Auswahl nach Anspruch 1, **dadurch gekennzeichnet, dass** das LAN-Kommunikationsnetzwerk (7) so konfiguriert ist, dass es über die drahtlose Kommunikationsvorrichtung (5) eine vom Benutzer über die virtuelle Tastatur (9) gewählte Auswahlnummer oder einen Code an die CPU (3) des Verkaufsautomaten (4) übermittelt.

3. System zur Auswahl nach Anspruch 2, **dadurch gekennzeichnet, dass** die CPU (3) die getätigte Zahlung steuert und die Abgabe ausgewählter Produkte durch die Öffnung oder Ausgabetür (10) ermöglicht.

## Revendications

1. Système de sélection de produits livrés par des machines de vente automatique, comprenant un distributeur automatique (4), qui a une partie frontale (8), une bouche ou porte (10) pour la distribution des produits contenus dans la partie frontale (8) et un circuit électronique comprenant un CPU (3) pour la sélection desdits produits, dans lequel ledit circuit électronique de sélection desdits produits intègre ou est connecté à un dispositif de communication sans fil (5), de type Bluetooth^{®} ou Wi-Fi, de sorte que ledit distributeur automatique (4) active un réseau de communication LAN (7), ledit réseau de communication LAN (7) étant connecté, à une distance prédéterminée dudit distributeur automatique (4), avec au moins un téléphone portable d'utilisateur (6) et dans lequel ledit réseau de communication LAN (7) est connecté avec un utilisateur ayant un téléphone portable (6) le plus proche du distributeur automatique (4), excluant ainsi les autres utilisateurs, ledit dispositif de communication sans fil (5) étant configuré pour transmettre un clavier virtuel (9) au téléphone portable de cet utilisateur (6), ledit clavier virtuel (9) étant affiché sur l'écran dudit téléphone portable (6) et correspondant à un panneau de commande et de sélection dudit distributeur automatique (4), afin que l'utilisateur puisse sélectionner et acheter un produit contenu dans ledit distributeur automatique (4) par l'intermédiaire dudit clavier virtuel (9), **caractérisé en ce que** ledit réseau de communication LAN (7) est automatiquement interrompu à chaque fois qu'une sélection est effectuée par l'utilisateur par l'intermédiaire dudit clavier virtuel (9), afin de permettre d'autres accès par d'autres utilisateurs.

2. Système de sélection selon la revendication 1, **caractérisé en ce que** ledit réseau de communication LAN (7) est configuré pour transmettre, via ledit dispositif de communication sans fil (5), un numéro ou un code de sélection choisi par l'utilisateur par le biais du clavier virtuel (9) à ladite CPU (3) dudit distributeur automatique (4).

3. Système de sélection selon la revendication 2, **caractérisé par le fait que** ladite CPU (3) contrôle le paiement effectué et permet la livraison des produits sélectionnés par ladite bouche ou porte de distribution (10).
